# EUROPEAN PATENT APPLICATION

(11) **EP 4 227 804 A1**
(43) Date of publication of application: **16.08.2023**
(21) Application number: 22155877.8
(22) Date of filing: 09.02.2022
(51) Int. Cl.: G06F 9/50

(54) **METHOD FOR ALLOCATING RESOURCES IN A MULTI-TENANT CLOUD COMPUTING PLATFORM**

(71) Applicant: Siemens Aktiengesellschaft, 80333 München (DE)
(72) Inventor: Hackländer, Frank, 70619 Stuttgart (DE)
(74) Representative: Siemens Patent Attorneys

(57) **Abstract**

The current disclosure describes a method for allocating resources to a tenant in a multi-tenant cloud computing platform. The method comprises determining one or more limiting resources from a plurality of resources of the multi-tenant cloud computing, determining a current number of tenants on the multi-tenant cloud computing platform, determining resource usage for each of the one or more limiting resources for each tenant on the multi-tenant cloud computing platform, determining a threshold limit for each corresponding limiting resource from the one or more limiting resources based on the determined resource usage for each of the one or more limiting resources and the current number of tenants, and ,throttling resource allocation of resources to a first tenant, upon resource utilization of a limiting resource by the first tenant exceeding the corresponding threshold limit associated with the limiting resource.

## Description

### Background:

The current disclosure relates to cloud computing platforms and more particularly to allocation of resources amongst the tenants utilizing the cloud computing platform. Cloud computing platforms are often used to provide services to a plurality of users via APIs or other connection options like messages. These services are often support multi-tenancy, i.e., sharing of a pool of resources amongst multiple customers, which make it more economical for customers (economy of scale). However, utilization of services and resources of the cloud computing platform has to be regulated, since sudden high load may have a bad performance impact on other customers using the same service. Therefore, one goal in a multi-tenant system is to avoid "noisy neighbors" effects.

Typically, this issue is addressed by putting rate limits on the API endpoints and other such mechanisms. These limits are being defined as fixed values per endpoint and customer. However, this does not allow for effective utilization of available resources.

### Description:

The current disclosure describes a method for allocating resources to a tenant in a multi-tenant cloud computing platform. The method comprises determining one or more limiting resources from a plurality of resources of the multi-tenant cloud computing, determining a current number of tenants on the multi-tenant cloud computing platform, determining resource usage for each of the one or more limiting resources for each tenant on the multi-tenant cloud computing platform, determining a threshold limit for each corresponding limiting resource from the one or more limiting resources based on the determined resource usage for each of the one or more limiting resources and the current number of tenants, and ,throttling resource allocation of resources to a first tenant, upon resource utilization of a limiting resource by the first tenant exceeding the corresponding threshold limit associated with the limiting resource.

Accordingly, the current disclosure describes a dynamic method of allocating resources using thresholds based on current resource utilization associated with the current tenants. Accordingly, this allows for effective utilization of resources as opposed to static or predetermined thresholds which do not account for current resource utilization. In an example, each resource from the one or more limiting resources is associated with a resource usage higher than an average resource threshold. In an example, the one or more limiting resources include one or more memory resources, one or more computing resources, and one or more connections to data sources.

In an example, the method is realized by a load balancer. The load balancer is implemented in the cloud computing platform and is responsible for allocation of resources and services to the tenants of cloud computing platform.

In an example, the method further comprises determining a number of instances and determining a distribution of resources of the instances amongst the tenants based on the determined threshold limit determined using the steps mentioned above.

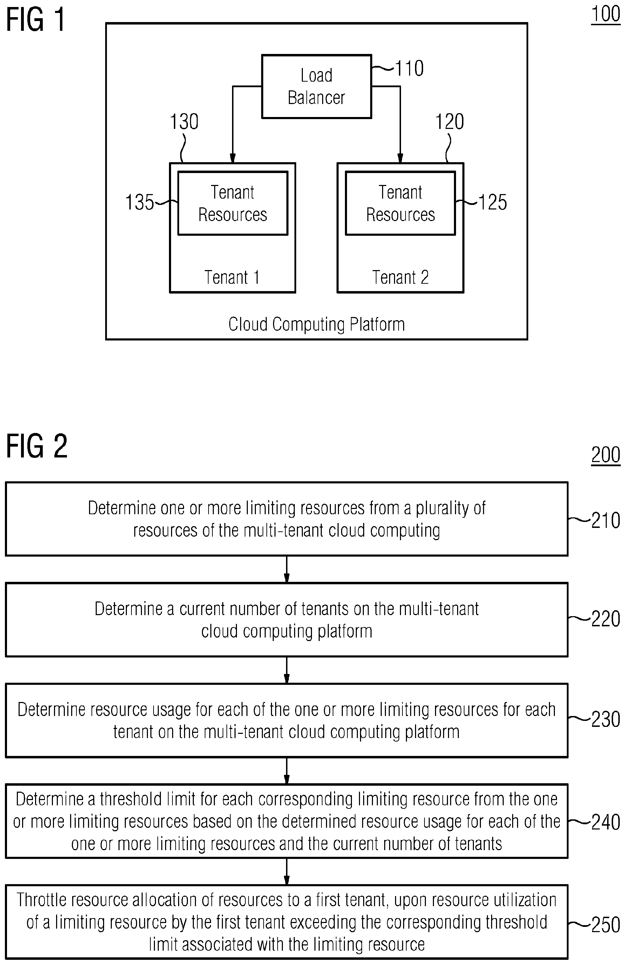

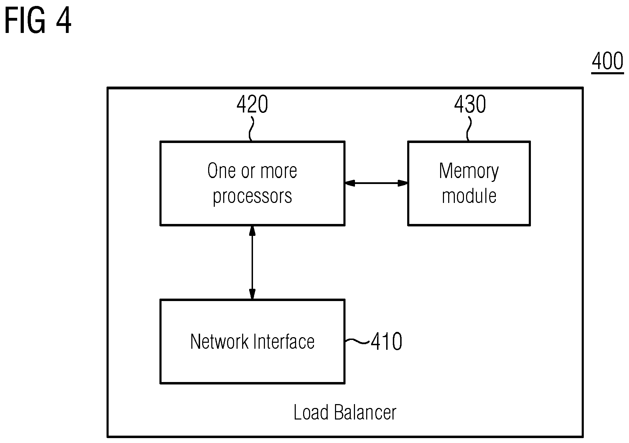

In another aspect, the current disclosure describes a load balancer for allocating resources to a tenant in a multi-tenant cloud computing platform. The load balancer comprises one or more processors connected to a memory module. The one or more processors are configured to determine one or more limiting resources from a plurality of resources of the multi-tenant cloud computing, determine a current number of tenants on the multi-tenant cloud computing platform, determine resource usage for each of the one or more limiting resources for each tenant on the multi-tenant cloud computing platform, determine a threshold limit for each corresponding limiting resource from the one or more limiting resources based on the determined resource usage for each of the one or more limiting resources and the current number of tenants and throttle resource allocation of resources to a first tenant, upon resource utilization of a limiting resource by the first tenant exceeding the corresponding threshold limit associated with the limiting resource. In another aspect, the current disclosure describes a non-transitory storage medium for allocating resources to a tenant in a multi-tenant cloud computing platform. The non-transitory storage medium comprises a plurality of instructions, which when executed on one or more processors, cause the one or more processors to determine one or more limiting resources from a plurality of resources of the multi-tenant cloud computing, determine a current number of tenants on the multi-tenant cloud computing platform, determine resource usage for each of the one or more limiting resources for each tenant on the multi-tenant cloud computing platform, determine a threshold limit for each corresponding limiting resource from the one or more limiting resources based on the determined resource usage for each of the one or more limiting resources and the current number of tenants, and throttle resource allocation of resources to a first tenant, upon resource utilization of a limiting resource by the first tenant exceeding the corresponding threshold limit associated with the limiting resource. The advantages of the method apply to the load balancer and the non-transitory storage medium mentioned herein. These aspects are described further in relation to figures 1-4.
Figure 1 illustrates an example cloud computing platform providing resources and services to one or more tenants;
Figure 2 illustrates a method for allocating resources to a tenant in a multi-tenant cloud computing platform;
Figure 3 illustrates an example cloud computing platform having a first instance and a second instance; and
Figure 4 illustrates a load balancer device for allocating resources to a tenant in a multi-tenant cloud computing platform.

Figure 1 illustrates a cloud computing platform 100 associated with one or more industrial facility. Industrial facility herein refers to any environment where one or more industrial processes such as manufacturing, refining, smelting, or assembly of equipment, generation, transmission or distribution of electricity, transportation, may take place. This includes process plants, oil refineries, automobile factories, power plants, smart grids, electrical substations, storehouses, etc. The plurality of industrial process and operations may be carried out in production cells using a plurality of devices such as control devices, field devices, mobile devices, etc., present with the corresponding production cell. The control devices include process controllers, programmable logic controllers, supervisory controllers, automated guided vehicles, robots, operator devices, etc. One or more control devices are connected to a plurality of field devices (not shown in figure) such as actuators and sensor devices for monitoring and controlling various industrial processes in the industrial facility. These field devices can include flowmeters, value actuators, temperature sensors, pressure sensors, etc. Additionally, the industrial facility includes a plurality of mobile devices (also referred to as mobile network devices) including one or more robots for performing a plurality of operations such as welding, assembly of parts; one or more autonomous guided vehicles for transportation and handling of material; one or more assets with RFID tags on conveyor belts, etc. in the industrial facility. Additionally, the industrial facility may include an operator station for displaying the status of the industrial facility to an operator and for allowing the operator to define KPIs for the control of the industrial processes in the facility. All the industrial devices may be connected to each other via a plant network (realized via wired and wireless technologies).

The cloud computing platform 100 is connected to one or more industrial devices in the one or more industrial facility via a communication channel associated with a network such as the Internet. The cloud computing platform 100 is configured to provide services such as computing and data storage services to the one or more industrial facilities using a common pool of resources. Examples of resources provided include one or more memory resources, one or more computing resources, and one or more connections to data sources. For example, as shown in figure 1, the cloud computing platform 100 includes two tenant instances tenant 1 (shown as tenant 130) and tenant 2 (shown as tenant 120). Each tenant instance is associated with one or more devices from the industrial facilities and is allocated resources specifically for the tenant from the pool of resources available at the cloud computing platform. For example, the tenant 130 has resources 135 reserved for its use and similarly, tenant 120 has resources 125 reserved for its use. The management of the allocation of resources based on the requests from the tenants is done by a load balancer 110.

The load balancer 110 is configured to manage resources of the cloud computing platform to ensure that there are no resource related issues affecting the performance of the services provided to the tenants. In this regard, the load balancer 110 is configured to determine the current resource utilization prior to allocation of resources to a new tenant or to an existing tenant. The current resource utilization-based allocation allows for effective allocation of resources to the tenants. This is further explained in relation to figure 2.

Figure 2 illustrates a method 200 for allocating resources to a tenant in a multi-tenant cloud computing platform. In an example, the method 200 is performed by the load balancer 110 of the cloud computing platform 100. The method 200 may be performed prior to a new tenant is added to the cloud computing platform or when there is a request for additional resources from an existing tenant.

At step 210, the load balancer 110 determines one or more limiting resources from a plurality of resources of the multi-tenant cloud computing platform. Limiting resource herein refers to a resource which is often act as a limiting factor for scaling of resources. In other words, limiting resources are the resources which often create a bottleneck due to their greater demand as opposed to their availability. In an example, limiting resources may be identified based on the historic resource utilization rate associated with the resources. For example, when the ratio of used resource units to the available resource units is above than a predefined threshold or in comparison to ratios of other resources, then such a resource may be regarding as a limiting resource. In another example, limiting resources may be selected by the user. Limiting resource may be any one of computing resource, memory resource or network resource.

At step 220, the load balancer 110 determines a current number of tenants on the multi-tenant cloud computing platform. The load balancer 110 determines the number of tenants who are currently active (i.e., utilizing the services of the cloud computing platform). In an example, tenants who are not using any resources at the moment may be disregarded and do not contribute to the count of tenants.

Then, at step 230, the load balancer determines resource usage for each of the one or more limiting resources for each tenant on the multi-tenant cloud computing platform. Resource usage here refers to total amount resources utilized by the tenant or a ratio of total amount of resources utilized by the tenant to the total amount resources present in the cloud computing platform. This could be determined based on current resource utilization associated with the tenant or using current resource utilization and the historic resource utilization associated with the tenant.

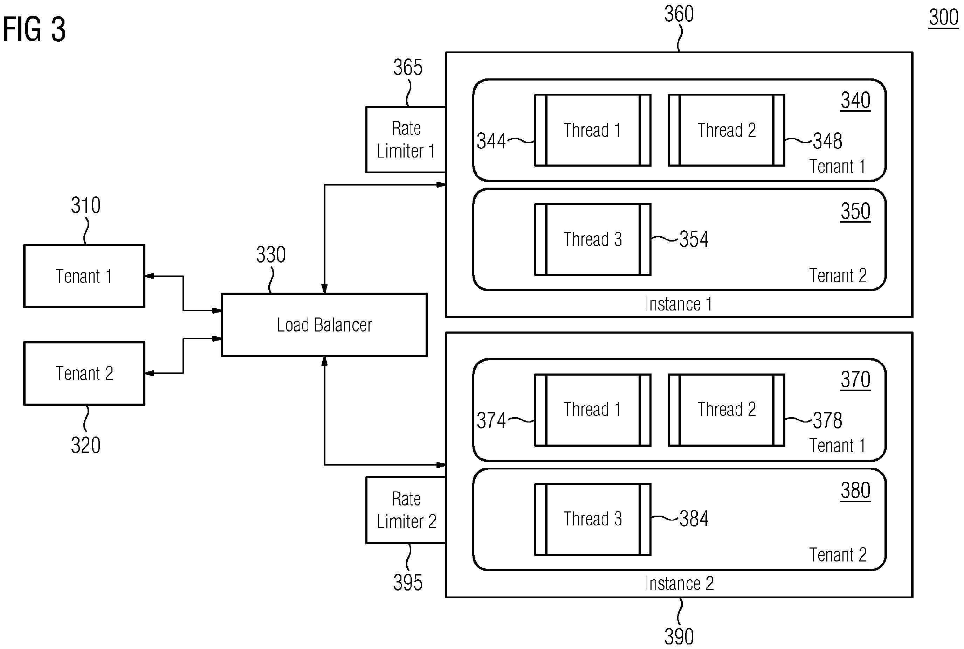

Then, at step 240, the load balancer 110 determines a threshold limit for each corresponding limiting resource from the one or more limiting resources based on the determined resource usage for each of the one or more limiting resources and the current number of tenants. Accordingly, the threshold limit is generated based on the current resource utilization and the historic resource utilization associated with the tenant for the corresponding limited resource. Then at step 250, the load balancer 110 throttles resource allocation of resources to a first tenant, upon resource utilization of a limiting resource by the first tenant exceeding the corresponding threshold limit associated with the limiting resource. Accordingly, the load balancer is able to regulate allocation of resources to tenants based on the current resource utilization associated with the tenants of the multi-tenant cloud computing platform 100. This is further explained using an example provided in figure 3.

It may be noted by a person skilled in the art that while the above step 250 is illustrated to be performed by the load balancer 110, the step 250 may be performed in coordination with other components. For example, the step 250 may be performed by rate limiting components associated with corresponding instances. For example, each instance may include a rate limiting component which could coordinate with the load balancer 110 to evaluate and perform throttling as mentioned in step 250. This is further explained in reference to figure 3.

It may be noted by a person skilled in the art while the above method is described in relation to the cloud platform, the method may be realized for each instance in the cloud platform. Particularly, this would allow for utilization of thresholds within each instance thereby allowing for scaling up or scaling down of instances and resources without affecting the thresholds determined.

Figure 3 illustrates a cloud platform 300 providing services to two tenants 310 and 320. The service and resource requests from the tenants are handled by the load balancer 330 of the cloud platform 300. As mentioned above, the cloud platform provides various services and resources such as compute resources, memory resources, network resources, etc. For the purpose of the example, the threads used by the tenants are shown as the resource being provided by the cloud platform 300 to the tenants 310 and 320.

Additionally, the cloud platform 300 comprises a plurality of instances (shown as the instances 360 and 390). The number of instances of the cloud platform 300 is dynamic and may be scaled up or down. In the example, the cloud platform 300 includes instances 360 and 390, both of which are used by the tenants 310 and 320. Accordingly, the first instance 360 includes three threads 344, 348 and 354. Threads 344 and 348 are used by the tenant 310. Similarly, the thread 354 is used by the tenant 320. Similarly, the second instance 390 includes three threads 374, 378 and 384. Threads 374 and 378 are used by the tenant 310. Similarly, the thread 384 is used by the tenant 320.

The load balancer 330 is configured to determine one or more limiting resources from a plurality of resources of the multi-tenant cloud computing platform 300. In the example, limiting resource is assumed to be threads. To determine threads as the limiting resource, the load balancer determines the ratio of used threads against the total threads available and checks if this ratio is above a predefined threshold or above similar ratios (i.e., used resource against total resources available) associated with other resources. For example, out of nine available threads, 6 threads are currently used, as opposed to two virtual network interfaces from eight virtual network interfaces. Accordingly, ratio of the threads used (6/9) is greater than ratio of virtual network interfaces used (2/8). Accordingly, threads are determined as the limited resource. While the current example is explained using a single resource as the limited resource, multiple resources may be selected.

Then, the load balancer 110 determines a current number of tenants on the multi-tenant cloud computing platform. In the current case, the load balancer 330 determines that there are two tenants 310 and 320. Then, the load balancer determines resource usage for each of the one or more limiting resources for each tenant on the multi-tenant cloud computing platform. For example, as shown in the current case, the load balancer determines that tenant 1 utilizes 3 threads per instance. This determination is based also on historic resource usage associated with the tenant 1. Similarly, the load balancer 330 determines the resource usage for tenant 2. For example, based on the current usage (i.e., 1 thread per instance) and historic usage (2 threads per instance), the load balancer 330 determines the resource usage associated with the tenant 2 as 2 threads per instance.

Then, the load balancer 110 determines a threshold limit for each corresponding limiting resource from the one or more limiting resources based on the determined resource usage for each of the one or more limiting resources and the current number of tenants. Accordingly, in the current case, the load balancer determines three threads as a threshold limit as the thread threshold for the tenant 1. Similarly, the load balancer determines two threads as the threshold limit as the thread threshold for the tenant 2. In another example, the load balancer 110 determines a threshold limit based on total resource utilization and total number of tenants. For example, in the instance 1, there are three threads being used and there are two tenants. Accordingly, allowing equal resource distribution, threshold limit is set to two threads per tenant per instance.

Accordingly, when receiving requests for additional resources from the tenants, the load balancer checks the current resource usage against the threshold limit to determine if additional resources can be allocated or if resource allocation has to be throttled. In an example, such as a check is performed in coordination with the rate limiting component or rate limiter of the corresponding instance.

For example, on receiving a request from the tenant 1 for additional allocation of threads, the load balancer 300 along with the rate limiters 365 and 396 determine that the tenant 1 has at the threshold limit and additional allocation of resources would result in exceeding the threshold limit. Accordingly, the load balancer along with the rate limiters throttle resource allocation of resources to a first tenant, upon resource utilization of a limiting resource by the first tenant exceeding the corresponding threshold limit associated with the limiting resource. Similarly, for example, when receiving request for additional threads from the tenant 2, the load balancer checks to see if the current threads utilized is above the threshold limit of two threads (per instance). Accordingly, in the current case, since the thread usage is at 1 thread per instance, more threads can be allocated to the tenant 2. Accordingly, the current method allows for a dynamic allocating resources using thresholds based on current resource utilization associated with the current tenants. Accordingly, this allows for effective utilization of resources as opposed to static or predetermined thresholds which do not account for current resource utilization. Additionally, since the rate limiters are implemented at the instance level, this allows for easy scaling of the cloud platform.

The present disclosure can take a form of a computer program product comprising program modules accessible from computer-usable or computer-readable medium storing program code for use by or in connection with one or more computers, processing units, or instruction execution system. For example, the load balancer 110 may be realized across one or more devices. For example, accordingly, the current disclosure as describes a load balancer device 400. The device 400 implements the method 200. The device 400 includes one or more network interfaces (410), one or more processors 420 and a non-transitory storage medium 430 (also referred to a memory module 430). The non-transitory storage medium 430 contains a plurality of instructions for implementing the method 200.

Upon execution of the instructions in the memory module 430, the one or more processors 420 are configured to determine one or more limiting resources from a plurality of resources of the multi-tenant cloud computing platform, determine a current number of tenants on the multi-tenant cloud computing platform, determine resource usage for each of the one or more limiting resources for each tenant on the multi-tenant cloud computing platform, determine a threshold limit for each corresponding limiting resource from the one or more limiting resources based on the determined resource usage for each of the one or more limiting resources and the current number of tenants of the multi-tenant cloud computing platform and throttle resource allocation of resources to a first tenant upon resource utilization of a limiting resource by the first tenant exceeding the corresponding threshold limit associated with the limiting resource.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method (200) for allocating resources to a first tenant (130) in a multi-tenant cloud computing platform (100), the method (200) comprising:
a. determining (210) one or more limiting resources from a plurality of resources of the multi-tenant cloud computing platform (100);
b. determining (220) a current number of tenants (120, 130) on the multi-tenant cloud computing platform (100) ;
c. determining resource usage for each of the one or more limiting resources for each tenant (120, 130) on the multi-tenant cloud computing platform (100);
d. determining a threshold limit for each corresponding limiting resource from the one or more limiting resources based on the determined resource usage for each of the one or more limiting resources and the current number of tenants on the multi-tenant cloud computing platform (100); and
e. throttling resource allocation of resources to the first tenant (130), upon resource utilization of a limiting resource by the first tenant (130) exceeding the corresponding threshold limit associated with the limiting resource.

2. The method (200) as claimed in claim 1, wherein each limiting resources of the one or more limiting resources, is associated with a resource usage higher than a predefined resource usage.

3. The method (200) as claimed in claim 1, wherein the one or more limiting resources include one or more memory resources, one or more computing resources, and one or more connections to data sources.

4. The method (200) as claimed in claim 1, wherein the method (200) is realized by a load balancer associated with the multi-tenant cloud computing platform (100).

5. The method (200) as claimed in claim 1, wherein method (200) further comprises determining a number of instances available on the multi-tenant cloud computing platform (100) and performing the above steps for each instance of the multi-tenant cloud computing platform (100) .

6. A load balancer (400) for allocating resources to a first tenant (130) in a multi-tenant cloud computing platform (100), the load balancer (400) comprising:
a. one or more processors (420) connected to a memory module (430), the one or more processors (420) configured to:
i. determine one or more limiting resources from a plurality of resources of the multi-tenant cloud computing platform (100);
ii. determine a current number of tenants on the multi-tenant cloud computing platform (100);
iii. determine resource usage for each of the one or more limiting resources for each tenant on the multi-tenant cloud computing platform (100);
iv. determine a threshold limit for each corresponding limiting resource from the one or more limiting resources based on the determined resource usage for each of the one or more limiting resources and the current number of tenants of the multi-tenant cloud computing platform (100); and
v. throttle resource allocation of resources to a first tenant (130), upon resource utilization of a limiting resource by the first tenant (130) exceeding the corresponding threshold limit associated with the limiting resource.

7. A non-transitory storage medium (430) for allocating resources to a tenant (130) in a multi-tenant cloud computing platform (100), the non-transitory storage medium (430) comprising a plurality of instructions, which when executed on one or more processors (420), cause the one or more processors (420) to:
a. determine one or more limiting resources from a plurality of resources of the multi-tenant cloud computing platform (100);
b. determine a current number of tenants on the multi-tenant cloud computing platform (100);
c. determine resource usage for each of the one or more limiting resources for each tenant on the multi-tenant cloud computing platform (100);
d. determine a threshold limit for each corresponding limiting resource from the one or more limiting resources based on the determined resource usage for each of the one or more limiting resources and the current number of tenants of the multi-tenant cloud computing platform (100); and
e. throttle resource allocation of resources to a first tenant, upon resource utilization of a limiting resource by the first tenant exceeding the corresponding threshold limit associated with the limiting resource.
